# FASCICULE DE BREVET EUROPEEN

(11) **EP 0 413 017 B1**
(45) Date de publication et mention de la délivrance du brevet: **26.07.1995**
(21) Numéro de dépôt: 90903596.6
(22) Date de dépôt: 13.02.1990
(51) Int. Cl.: H04N 7/24, H04N 5/92

(54) **PROCEDE ET DISPOSITIF DE COMPRESSION DE L'INFORMATION DESTINES AU DECODAGE COMPATIBLE D'UNE FAMILLE DE SIGNAUX DE TELEVISION DE RESOLUTIONS CROISSANTES**
VERFAHREN UND VORRICHTUNG ZUM KOMPRIMIEREN VON INFORMATION FÜR EINE VEREINBARTE DEKODIERUNG EINER FERNSEHSIGNALFAMILIE MIT STEIGENDER AUFLÖSUNG
PROCESS AND DEVICE FOR COMPRESSING DATA DESIGNED FOR THE COMPATIBLE DECODING OF A GROUP OF TELEVISION SIGNALS WITH AN INCREASING DEGREE OF RESOLUTION

(30) Priorité: 21.02.1989 FR 8902235
(43) Date de publication de la demande: 20.02.1991
(73) Titulaire: THOMSON-CSF, 75008 Paris (FR)
(72) Inventeur: TOURTIER, Philippe, F-35700 Rennes (FR); LE PANNERER, Yves-Marie, F-35760 S.-Grégoire (FR)
(74) Mandataire: Ruellan-Lemonnier, Brigitte
(86) Numéro de dépôt international: FR9000101
(87) Numéro de publication internationale: WO9010353

(56) Documents cités:
- EP-A- 0 293 041
- WO-A-87/06418
- US-A- 4 665 436
- Frequenz, vol. 37, nos. 11/12, novembre/décembre 1983, (Berlin, DE), H. Sauerburger et al.: "Verarbeitung und digitale Codierung von HDTV-Signalen", pages 288-299, voir pages 291, 292, paragraphe 2.2.2: "Verfahren II", pages 292 colonne de droite, ligne 41 - page 293, colonne de gauche, ligne 15; pages 296 colonne de gauche, ligne 12 page 298, colonne de droite, ligne 52
- Rundfunktechnische Mitteilungen, vol. 28, no. 5, septembre-octobre 1984, (Norderstedt, DE), F. Stollenwerk et al.: "Fernsehsysteme mit kompatibel erhöhter Bildqualität - ein Systemvergleich", pages 224-234, voir page 224, co- lonne de gauche, ligne 1 - page 228, colonne de droite, ligne 333
- IEEE Global Telecommunications, Conference, Houston, Texas, décem- bre 1986, vol. 2, IEEE, (New York, US), J.A. Bellisio et al.: "Television codingfor broadband ISDN", pages 894-900, voir page 896, colonne de droite, ligne 23 - page 898, colonne de droite, ligne 26
- IEEE Journal on Selected Areas in Communications, vol. SAC-4, no. 4, juillet 1986, IEEE, (New York, US), L. Stenger: "Digital coding of TV signals for ISDN-B applications"; pages 514-528, voir page 520, colonne de droite, ligne 50 - pages 523, colonne de droite, ligne 34

## Description

La présente invention concerne un procédé et un dispositif de compression de l'information destiné au décodage compatible d'une famille de signaux de télévision de résolutions croissantes. Elle s'applique notamment aux systèmes de transmission et de réception de signaux vidéo numériques et aux magnétoscopes numériques.

Il est connu pour réduire le débit d'information des dispositifs de compression de l'information de coder l'image numérisée en mettant en oeuvre une transformation bidimensionnelle, de type cosinus, Fourrier, Hadamard, Haar, ou Karhunen-Loeve. Le codage par transformée permet d'exploiter les propriétés statistiques de la source d'images et les aptitudes psychovisuelles des observateurs. Comme le nombre d'opérations à effectuer pour effectuer ces codages croît très vite avec la taille de l'image, celle-ci est subdivisée en fenêtres ou blocs et la transformation est appliquée sur chacun des pixels de la fenêtre. Cette transformation bidimensionnelle permet d'obtenir autant de coefficients qu'il y a de pixels dans chaque bloc d'images.

La réduction du débit est obtenue en quantifiant les coefficients et en décrivant la suite des valeurs obtenues à l'aide d'un code à longueur variable. Du fait que cette dernière opération génère un débit variable, et que le canal de télévision possède un débit fixe, une mémoire tampon est adjointe à la sortie du codeur pour assurer une régulation du flux d'informations circulant dans le codeur.

Le décodage consiste à décoder les mots de code à longueur variable reçus pour retrouver les coefficients de la transformation bidimensionnelle de départ, puis à restituer les valeurs numériques représentant chaque élément d'image en appliquant, aux coefficients de la transformation correspondant à chaque bloc d'image, la transformation bidimensionnelle inverse de celle utilisée pour le codage. Les transformations utilisées en pratique sont des transformations pour lesquelles il existe des algorithmes exécutables rapidement, comme c'est le cas, par exemple, des algorithmes de codage de la transformation cosinus dont des descriptions peuvent être trouvées dans les documents français FR-A- 2575351 ou FR-A-2 625 635, publié 7.7.89, déposées au nom de la Demanderesse. D'une manière générale, de tels systèmes sont applicables à des images qui ont une résolution connue à l'avance, définie en nombre de lignes et en nombre de points par ligne, comme celle, par exemple, à 720 points par 576 lignes définie par la recommandation 661 du CCIR. Mais avec ce type de résolution coexistent d'autres types de résolutions telles que celles des systèmes de télévision haute définition décrits par exemple dans l'article de J. CHATEL ayant pour titre "Compatible Hierarchy of Studio standards" Conf. SMPTE San Francisco 1989 1-3 février et la résolution réduite à 288 lignes de 360 points pour les applications demandant une qualité d'image réduite comme le vidéo-téléphone. Cette diversité des résolutions entraîne une diversité des systèmes de codage et décodage ainsi que des complications de gestion des liaisons des canaux satellites ou radio qui devront à certaines occasions, retransmettre autant de fois les mêmes programmes audio-visuels qu'il y a de systèmes différents. Elle impose également des contraintes au niveau des utilisateurs qui peuvent être conduits à changer leurs récepteurs pour bénéficier de la qualité d'image offerte par les systèmes de télévision haute définition.

Cependant ce problème peut en partie être résolu par l'enseignement connu de la demande de brevet WO-A--87/06418 qui décrit un dispositif de codage multirésolution. Malheureusement ce système n'est pas satisfaisant pour l'enregistrement de signaux vidéo haute définition sur magnétoscope, car il conduit à des réalisations de décodeurs coûteux à pleine résolution pour le recalage rapide sur image.

Le but de l'invention est de pallier les inconvénients précités.

A cet effet, l'invention a pour objet un procédé de compression de l'information destiné au décodage compatible d'une famille de signaux de télévision de résolutions croissantes, ces signaux étant transmis entre au moins un codeur d'émission et un décodeur de réception consistant, au niveau du codeur, à découper la bande de fréquence spatiale du signal à transmettre de résolution la plus grande en sous-bandes adjacentes, caractérisé en ce qu'il réalise au niveau du codeur une transformation bidimensionnelle de type cosinus du signal à transmettre et qu'il découpe la bande par un balayage successif des sous-blocs imbriqués résultants de la transformation et correspondants à des groupes de sous-bandes de résolutions différentes et, au niveau du décodeur, à décoder les signaux reçus relatifs aux groupes de sous-bandes en ne considérant que ceux qui sont nécessaires à la reconstitution d'au moins 1 membre de la famille de résolution correspondant à la résolution du récepteur.

L'invention a pour principaux avantages qu'elle permet d'assurer des compatibilités à la fois ascendantes et descendantes entre les systèmes de télévision de résolutions différentes. Elle permet, par exemple, à des décodeurs pour récepteurs des standards de télévision 625 ou 525 lignes, d'être à même de décoder des signaux de résolution inférieure comme ceux du vidéo-téléphone ou d'être à même de décoder des signaux des standards de télévision haute définition. Elle permet également d'assurer une compatibilité entre des systèmes de distribution de télévision des standards 625 ou 525 lignes et les magnétoscopes numériques qui imposent, pour que les modes avance rapide et surtout retour rapide puissent être effectivement réalisés, que le type de compression soit non récursif (c'est-à-dire que le codage d'une image puisse se faire en mode intratrame, sans appel au codage passé).

D'autres caractéristiques et avantages de l'invention apparaîtront ci-après, à l'aide de la description qui suit faite en regard des dessins annexés qui représentent :
- la figure 1, un schéma montrant l'imbrication des zones spectrales occupées par différents standards de télévision connus à résolutions différentes ;
- les figures 2-7, des exemples de décomposition d'une image de standard haute définition en d'autres sous-images de résolutions plus faibles ;
- la figure 8, un mode de réalisation d'un codeur selon l'invention ;
- la figure 9, le mode de transmission mis en oeuvre par l'invention pour transmettre les sous-images de résolutions différentes ;
- la figure 10, un mode de réalisation d'une architecture de décodage selon l'invention ;
- les figures 11 à 13, une décomposition du signal haute définition en plusieurs sous-bandes obtenues, selon un deuxième mode de réalisation de l'invention, au moyen de filtres orthogonaux ;
- la figure 14, une illustration d'un procédé de sur-échantillonnage mis en oeuvre dans l'invention pour passer d'une structure d'image quinconce à une structure d'image orthogonale ;
- la figure 15, une réalisation d'un décodeur correspondant aux décompositions des figures 11 à 13.
- les figures 16, 17 et 18, une illustration d'un troisième mode de réalisation du procédé de découpage de spectres de signaux haute définition en sous-bandes exploitant un partage en sous-blocs des coefficients d'une transformation bidimentionnelle de type cosinus.

Dans les systèmes de télévision connus, du type de ceux qui sont décrits par exemple, dans l'article de M.M. Wendland Schroëder ayant pour titre "On picture Quality of some Television signal Processing Techniques" publié dans le SMPTE journal d'Octobre 1984 ou dans les articles de Jean CHATEL ayant pour titre "Toward a World Studio Standard for High Definition TV" publié dans la revue IBC 1988 et "Compatible Hierarchy of studio standards" (conf. SMPTE 1-3 février 1979 San Francisco), le signal de télévision haute définition est défini par le fait qu'il possède deux fois plus de lignes et deux fois plus de points par ligne que le signal de télévision des systèmes 625 ou 525 lignes actuellement existants. Ce signal haute définition (HD) qui est encore connu sous l'abréviation HDP du terme anglo-saxon "High Definition Progressive" possède une définition correspondant à 1920 points par ligne et 1152 lignes qui correspond au double de résolution du système de télévision connu sous l'abréviation EDP du terme anglo-saxon "Enhanced Definition Progressive" dont la définition est de 576 lignes de 960 points. De manière intermédiaire, le système HDQ qui est l'abréviation du terme anglo-saxon "High Definition Quincunx", possède 1152 lignes de 960 points et a ses points disposés en quinconce de ligne à ligne comme cela est décrit et représenté dans les articles de Jean CHATEL cité précédemment. D'autres systèmes de résolutions inférieures existent également. Il s'agit par exemple du système connu sous la désignation EDQ qui est l'abréviation du terme anglo-saxon "Enhanced Définition Quincunx" et du système connu sous la désignation "VT" qui est l'abréviation du terme anglo-saxon "Video Telephon". Le système EDQ définit l'image par 576 lignes de 480 points par ligne, disposés en quinconce, et le système VT définit l'image par 288 lignes de 480 points.

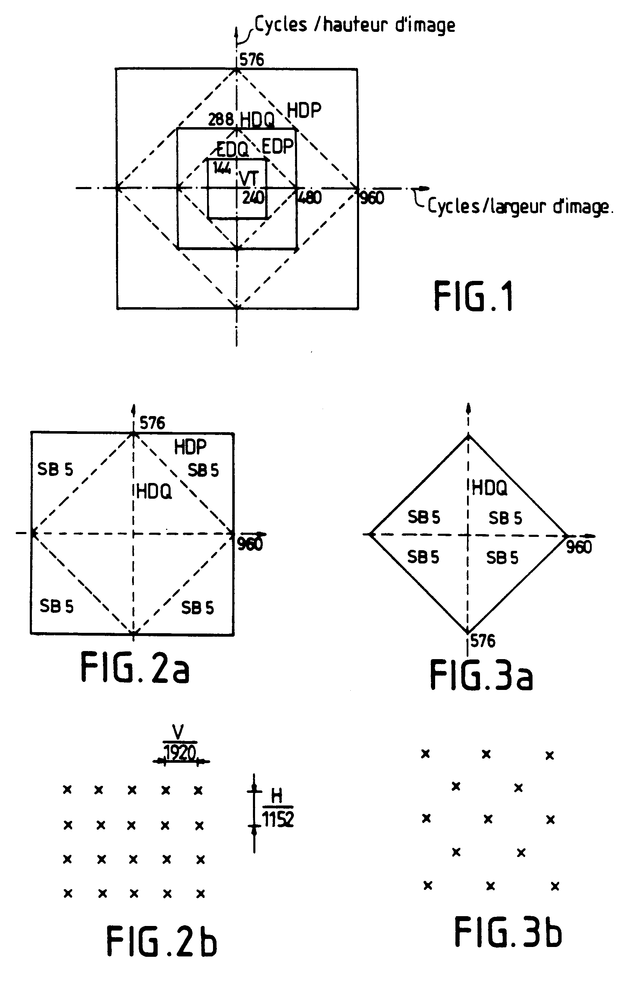

Les résolutions spatiales comparées de ces systèmes sont représentées dans le plan orthonormé de la figure 1, où sont portées sur l'axe des abscisses, les fréquences spatiales horizontales de l'image en cycles par largeur d'image, et sur l'axe des ordonnées les fréquences spatiales verticales de l'image mesurées en cycles par hauteur d'image. Sur cette figure les domaines spectraux qui sont décrits par les systèmes d'échantillonnage orthogonaux des signaux HDP, EDP et VT sont des rectangles, tandis que les domaines descriptibles par les systèmes quinconces HDQ et EDQ sont des losanges. Ces domaines sont emboîtés respectivement les uns dans les autres. Les bandes passantes des systèmes HDP et HDQ sont limitées à 960 cycles par largeur d'image et 576 cycles par hauteur d'image. Celles des systèmes HDQ et EDP sont limitées à 480 cycles par largeur d'image et à 288 cycles par hauteur d'image et la bande passante d'un système VT est limitée à 240 cycles par largeur d'image et à 144 cycles par hauteur d'image. Dans cette imbrication, les fréquences de coupure qui limitent horizontalement et verticalement chaque domaine, sont des multiples de deux des fréquences de coupure du système VT (240 cycles par largeur d'image et 144 par hauteur d'image).

Basée sur la remarque précédente, l'invention consiste à découper l'image en sous-bandes de fréquences au moyen de filtres spaciaux selon une méthode connue de codage sous bande à l'aide de filtres orthogonaux et diagonaux telle que décrite, par exemple, dans l'article de M.M Wendland Schroëder cité précédemment. Les bandes découpées, soit représentent une des résolutions du signal lorsqu'il s'agit par exemple de coder la bande VT, soit permettent par combinaison de reconstituer une des résolutions précédemment évoquées EDQ, EDP, HDQ ou HDP.

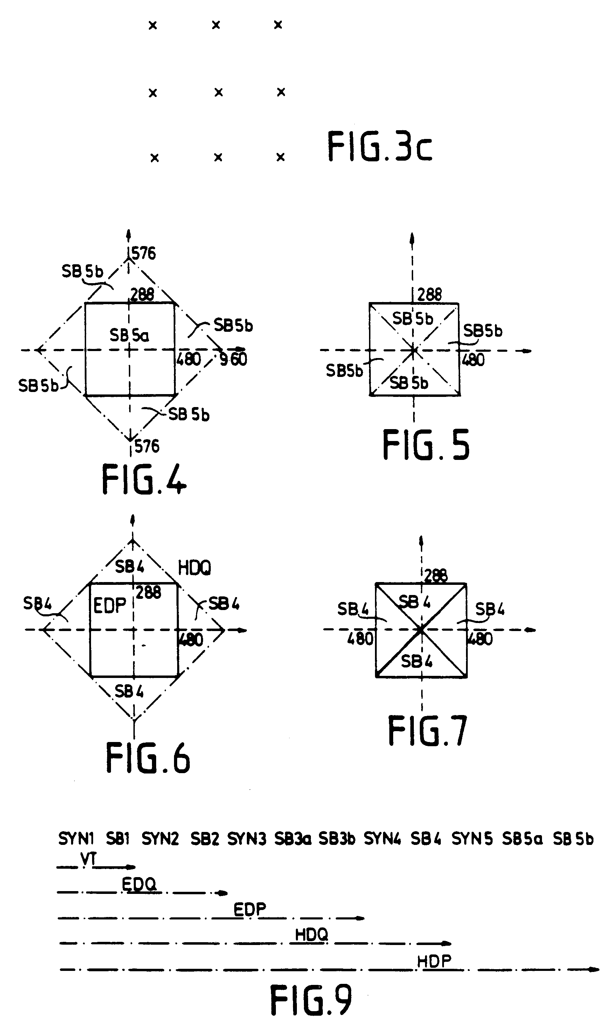

Le découpage en bandes de fréquence a lieu suivant le principe expliqué ci-après, à l'aide des figures 2a à 7. Le spectre du signal HDP de la figure 2a, correspond à la structure d'échantillonnage orthogonale décrite sur la figure 2b. Les échantillons successifs sur une ligne sont séparés entre eux d'une distance V/1920 et les lignes sont séparées entre elles d'une distance H/1152, V et H représentant respectivement la largeur et la hauteur de l'image. Le spectre du signal HDP est ensuite filtré par un filtre diagonal, dont le spectre de bande est délimité à la figure 3a par un losange. Ce signal qui a une bande passante limitée, est décrit par une structure quinconce du type de celle qui est décrite à la figure 3b. Cette structure correspond à un sous-échantillonnage par 2, de la structure orthogonale de la figure 2b. Comme la structure quinconce de la figure 3b ne se prête pas facilement à un codage de type transformation cosinus, celle-ci est transformée en une double structure orthogonale de la façon représentée aux figures 6 et 7. Le signal HDQ de spectre losange et de structure quinconce est d'abord filtré selon un gabarit rectangulaire, inscrit dans le losange correspondant au signal EDP. Le signal obtenu peut encore être décrit par une structure orthogonale obtenue par un sous-échantillonnage de la structure HDQ conformément à la figure 3c. Sur la figure 6 la différence des spectres HDQ et EDP, est un spectre formant une sous-bande de fréquence SB4 et ce spectre a la forme de quatre pointes en diamant ne possédant pas de basses fréquences. Ce spectre peut être sous-échantillonné à son tour selon la structure représentée à la figure 3c, ce qui donne le spectre de la figure 7.

De façon similaire, une sous-bande de fréquence SB5 du signal HDP est obtenue par soustraction du spectre occupé par le signal HDQ au spectre occupé par le signal HDP. Cette sous-bande SB5 peut être sous-échantillonnée selon une structure quinconce du type de celle représentée à la figure 3b, pour avoir la forme d'un spectre en losange. Ce spectre peut être réduit à son tour par le procédé mentionné précédemment, en deux spectres rectangulaires formant les sous-bandes SB5a et SB5b, tels que représentés aux figures 4 et 5.

Au moyen de filtrages diagonaux ou orthogonaux dont les réalisations sont à la portée de l'homme de l'art, le procédé décrit précédemment permet de réduire un signal HDP formé de 1152 lignes et 1920 points par ligne, en une série de sous-bandes SB1, SB2, SB3a, SB3b, SB4, SB5a, SB5b ayant des structures de spectres rectangulaires décrites soit par 960 points et 576 lignes pour les bandes SB5a, SB5b, SB4, soit par 480 points et 288 lignes pour les bandes SB1, SB2, SB3a, SB3b.

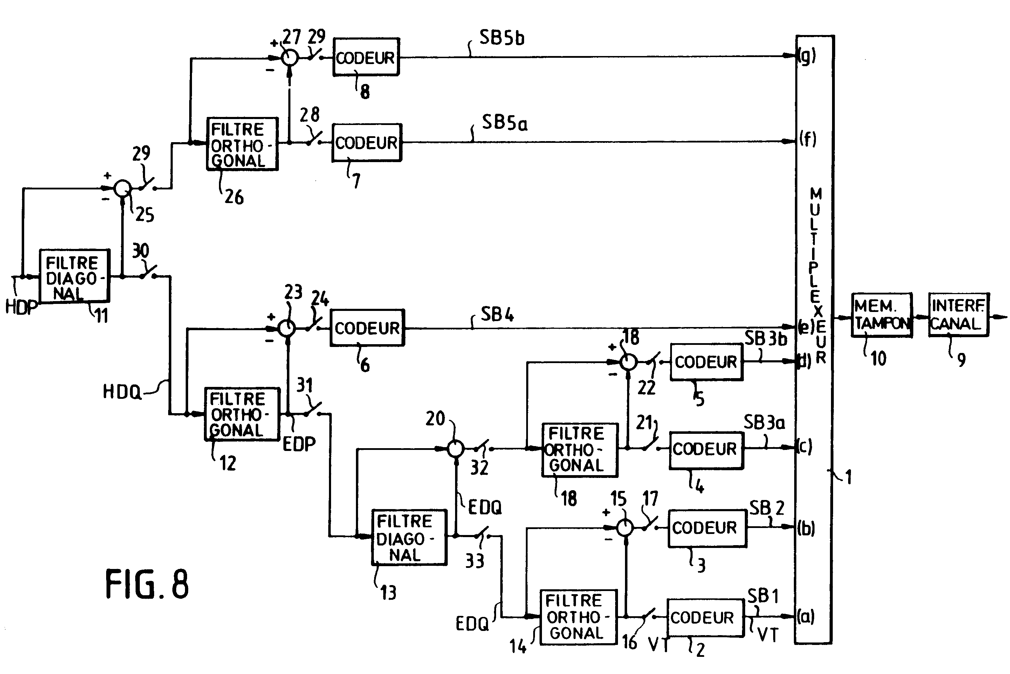

Les sous-images de spectres rectangulaires peuvent être codées séparément par la méthode de compression par transformée cosinus ou toute transformation bidimensionnelle des types précités. La figure 8 décrit un codeur fonctionnant suivant ce principe.

Ce codeur est organisé autour d'un multiplexeur 1 et de codeurs élémentaires référencés de 2 à 8 à transformées bidimentionnelles, du type à transformée cosinus notamment, tels que décrit par exemple dans les demandes de brevet de la Demanderesse précitées. Le multiplexeur 1 transmet à un circuit d'interface-canal 9, par l'intermédiaire de registres tampon 10, les signaux codés des différentes sous-bandes décrites précédemment.

Le signal VT est obtenu par filtrages successifs du signal HDP au travers de filtres 11, 12, 13, 14 reliés dans cet ordre en série.

Le filtre 11 a la structure d'un filtre diagonal. Il transforme le signal HDP à 144 mégahertz en un signal HDQ de structure quinconce à 72 mégahertz.

Le filtre 12 a la structure d'un filtre orthogonal. Il transforme le signal HDQ en un signal EDP de structure orthogonale à 36 mégahertz.

Le filtre 13 a la structure d'un filtre diagonal. Il transforme le signal EDP en un signal EDQ de structure diagonale à 18 mégahertz.

Enfin, le filtre 14 a la structure d'un filtre orthogonal. Il transforme le signal EDQ en le signal VT de structure orthogonale à 9 mégahertz.

Le signal VT est appliqué sur l'entrée d'un codeur 2. Les signaux comprimés sont appliqués sur l'entrée (a) du circuit multiplexeur 1.

Le signal EDQ est décomposé en ses deux composantes orthogonales, par le filtre orthogonal 14 et par un circuit soustracteur 15 qui retranche les composantes du spectre du signal VT fournies par le filtre orthogonal 14 de l'ensemble du spectre en losange représentant la bande du signal EDQ. Le résultat de la soustraction est appliqué à l'entrée du codeur 3. après sous-échantillonnage symbolisé par le circuit 16. Les signaux comprimés par le codeur 3 sont appliqués à une entrée (b) du multiplexeur 1. Le signal EDQ transmis par le multiplexeur 1 est formé par la juxtaposition du signal VT fourni par le codeur 2 et du signal fourni par le codeur 3.

Le signal EDP est formé par la juxtaposition du signal EDQ a deux composantes orthogonales obtenues aux sorties respectives des codeurs 4 et 5. Les signaux à structure de spectre orthogonale sont fournis respectivement aux entrées des codeurs 4 et 5 par un filtre orthogonal 18 et par un circuit soustracteur de spectres 19 suivis des circuits de sous-échantillonnage 21 et 22. Un circuit soustracteur de spectres 20 soustrait le spectre à structure orthogonale formant le signal EDP, du spectre de structure en losange du signal EDQ fourni par le filtre diagonal 13. Le signal résultant fourni par le circuit soustracteur 20 est appliqué après sous-échantillonnages par le circuit 32 respectivement à l'entrée du filtre orthogonal 18 et à une première entrée du circuit soustracteur 19. Le résultat du filtrage fourni par le filtre orthogonal 18 est appliqué sur la deuxième entrée du circuit soustracteur 19 et après sous-échantillonnages par le circuit 21 sur l'entrée du codeur 4.

Le signal HDQ est formé par la juxtaposition au signal EDP d'un signal à spectre de structure orthogonale fourni par le codeur 6. Le signal appliqué à l'entrée du codeur 6 est obtenu par filtrage du signal HDQ au travers du filtre orthogonal 12 et d'un circuit soustracteur 23 suivi d'un circuit de sous-échantillonnage 24.

Le signal HDP est formé par la juxtaposition du signal HDQ à deux signaux de spectre à structure orthogonale fournis par les codeurs 7 et 8. Ces signaux sont obtenus après filtrage du signal HDP au travers d'un filtre diagonal 11, d'un circuit soustracteur 25 d'un circuit de sous-échantillonnage 29, d'un filtre orthogonal 26, d'un circuit soustracteur 27 et des circuits de sous-échantillonnage 28 et 29. Le circuit soustracteur 25 soustrait le signal HDQ du signal HDP. Le résultat est appliqué après sous-échantillonnage par le circuit 29 sur une première entrée du circuit soustracteur 27 et à l'entrée du filtre orthogonal 26. Le signal fourni par le filtre 26 est appliqué, d'une part, au travers d'un circuit de sous-échantillonnage 28, à l'entrée du codeur 7 et, d'autre part, sur une deuxième entrée du circuit soustracteur 27. Le résultat de la soustraction effectuée par le circuit soustracteur 27 est appliquée au travers d'un circuit de sous-échantillonnage 29, à l'entrée du codeur 8.

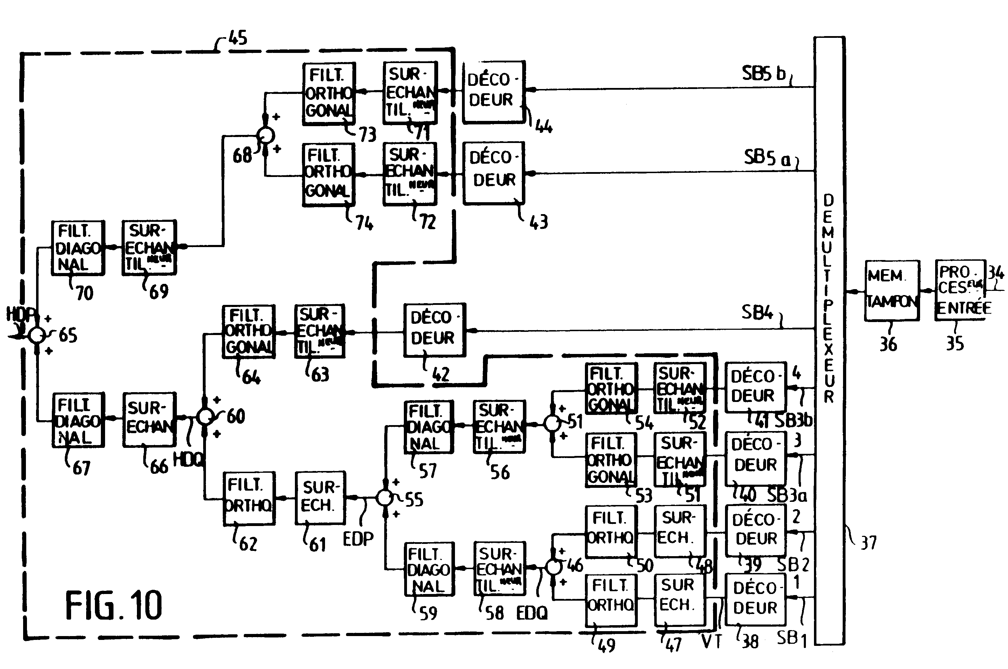

Le dispositif de codage de la figure 8 permet de transmettre sous forme d'un multiplex les différentes sous-images de la manière représentée à la figure 9. Ainsi, par exemple, pour chaque zone d'image décrite par un groupe déterminé N de lignes, 8 lignes par exemple, de la bande SB1 de transmission du signal VT, il existe N=8 lignes dans les sous-bandes SB2, SB3a, SB3b nécessaires à la transmission des signaux EDQ et EDP et 2N=16 lignes dans les sous-bandes SB4, SB5a, SB5b nécessaires à la transmission des signaux HDQ et HDP. Chaque sous-bande est séparée de façon connue par le circuit d'interface canal 9 par des signaux de synchronisation SYN1 à SYN5 non imitables, c'est-à-dire tels qu'ils ne puissent être imités par aucune concaténation des autres codes transmis. Entre ces motifs de synchronisation, la description des sous-bandes SB1 à SB5b est insérée de telle sorte que en décodant les informations entre les motifs de synchronisation SYN1 et SYN2, il soit possible de reconstituer le signal de résolution VT correspondant à la sous-bande SB1 ; qu'en décodant jusqu'au motif de synchronisation 3, on puisse constituer le signal de résolution EDQ formé de la juxtaposition des spectres SB1 et SB2 et ainsi de suite. Cette disposition permet aux décodeurs de réception de se synchroniser sur les motifs non-imitables SYN1 à SYN5, pour sélectionner, sans aucune autre opération, les signaux qu'il peuvent décoder pour reconstituer un signal vidéo d'une quelconque des résolutions décrites précédemment.

Un exemple de réalisation d'un décodeur compatible correspondant est représenté à la figure 10. Dans cet exemple, les signaux issus du canal de transmission sont appliqués sur une entrée 34 du décodeur et traversent d'abord un processeur d'entrée 35 qui détecte les motifs de synchronisation SYN pour isoler les informations à décoder de la façon décrite précédemment. Les signaux appartenant aux seules sous-bandes utiles à la résolution autorisée par le décodeur, sont transférées dans une mémoire tampon 36 puis décodées par le moteur de décodage du décodeur constitué par 7 décodeurs élémentaires à transformée cosinus référencés de 38 à 44 et un dispositif d'assemblage de sous-bandes 45 représenté à l'intérieur d'une ligne fermée en pointillés, pour reformer le signal selon un processus inverse du filtrage/sous-échantillonnage effectué par le dispositif de codage de la figure 8.

Le signal VT est reconstitué par le décodeur 38 à partir du signal de sous-bande SB1.

Le signal EDQ résulte du décodage des signaux dans les sous-bandes SB1 et SB2 par les décodeurs 38 et 39 et du regroupement des signaux décodés par les éléments 46 à 50 du dispositif de regroupement 45. Les éléments 46 à 50 se composent d'un circuit additionneur 46, d'un premier et d'un deuxième circuit de sur-échantillonnage 47, 48, et d'un premier 49 et d'un deuxième filtre orthogonal 50. Le circuit additionneur 46 reconstitue le signal EDQ par addition des signaux fournis par les décodeurs 38 et 39 mis en forme au travers des premier et deuxième sur-échantillonneurs 47, 48 et des filtres 49, 50.

De façon équivalente, les signaux des sous-bandes SB3a et SB3b sont appliqués sur un circuit additionneur 51 à deux entrées, après décodage dans les décodeurs 40 et 41, puis transformation dans les circuits de sur-échantillonnage 51, et 52, et filtrage dans des filtres orthogonaux 53 et 54. Les signaux obtenus aux sorties des circuits additionneurs 51 et 46 sont ensuite appliqués sur deux entrées d'opérandes d'un circuit additionneur 55 au travers, d'une part, d'un circuit de sur-échantillonnage 56 et d'un filtre diagonal 57, et, d'autre part, d'un circuit de sur-échantillonnage 58 et d'un circuit de filtrage diagonal 59. Le signal EDP est obtenu à la sortie du circuit additionneur 55.

De façon toujours similaire, le signal HDQ est obtenu à la sortie d'un circuit additionneur 60 par addition du signal EDP, mis en forme par un circuit de sur-échantillonnage 61 et un filtre orthogonal 62, au signal décodé dans la sous-bande SB4 par le décodeur 42 et mis en forme par un circuit de sur-échantillonnage 63 et un filtre orthogonal 64.

Le signal HDP est obtenu à la sortie d'un circuit additionneur 65, par l'addition, après mise en forme par un circuit de sur-échantillonnage 66 et un filtre diagonal 67, du signal HDQ au signal fourni par un circuit additionneur 68 et mis en forme par un circuit de sur-échantillonnage 69 et un filtre diagonal 70. Le circuit additionneur 68 effectue l'addition des signaux des sous-bandes SB5a et SB5b, décodées par les décodeurs 43 et 44 après une mise en forme effectuée par des circuits de sur-échantillonnage 71 et 72, et des filtres orthogonaux 73 et 74.

Le processus de recombinaison effectué par le décodeur de la figure 10, apparaît strictement inverse de celui de décomposition en sous-bandes employé au niveau du codeur de la figure 8. Il consiste simplement à sur-échantillonner, puis à filtrer les sous-bandes avant de les additionner suivant un principe bien connu de la théorie de l'interpolation. Par le jeu des recombinaisons successives, le moteur de décodage de la figure 10 permet éventuellement de reconstituer jusqu'au signal HDP mais aussi tous les niveaux intermédiaires décrits précédemment. A titre d'exemple, un moteur de décodage limité à la résolution EDP, ne sera pas équipé de toutes les fonctions représentées à la figure 10, mais uniquement des fonctions qui permettent de décoder les sous-bandes SB1, SB2, SB3a et SB3b. Toutefois un tel décodeur, bien que recevant un signal comprimé de plus haute résolution, pourra de ce fait le décoder et l'afficher sur un écran de résolution EDP. Ceci est obtenu grâce au processeur d'entrée (35) qui ne retient que les signaux relatifs aux sous-bandes SB1 à SB3b qu'il transfère dans la mémoire 36 et qui seuls sont décodés. La recombinaison de ces sous-bandes constitue un signal EDP de résolution inférieure au signal d'origine, mais qui représente les basses fréquences spatiales de la même image.

Un autre intérêt du dispositif de décodage qui vient d'être décrit, est qu'il permet de régler les problèmes liés à la réalisation des fonctions d'avance rapide et de retour rapide des magnétoscopes. L'incorporation du dispositif de décodage peut trouver son efficacité dans l'hypothèse notamment où l'enregistrement sur la bande magnétique du magnétoscope, est réalisé de façon que deux canaux puissent être distingués par un processus d'entrelacement par exemple. Le premier canal enregistre le signal tel qu'il est codé en distribution, et le second canal est destiné à la recherche rapide des images sur la bande. Ce second canal doit être placé physiquement sur la bande à un endroit où il est possible d'accéder même lorsque la bande est déroulée rapidement. Le signal placé sur ce canal est de préférence un signal de résolution réduite, par exemple de résolution égale à celle du signal VT. Ce signal est obtenu par décodage puis codage du signal présent à l'entrée du magnétoscope, qui est codé selon le codage de distribution décrit selon l'invention. L'intérêt de ce transcodage est qu'il est peu coûteux puisqu'il ne nécessite qu'un moteur de décodage et de codage correspondant à une faible résolution. D'autre part, ce codage présente aussi l'avantage de ne pas utiliser la récursivité temporelle et d'être à débit fixe. De la sorte une image est toujours représentée par le même nombre de bits et elle occupe une place constante parfaitement identifiable sur la bande.

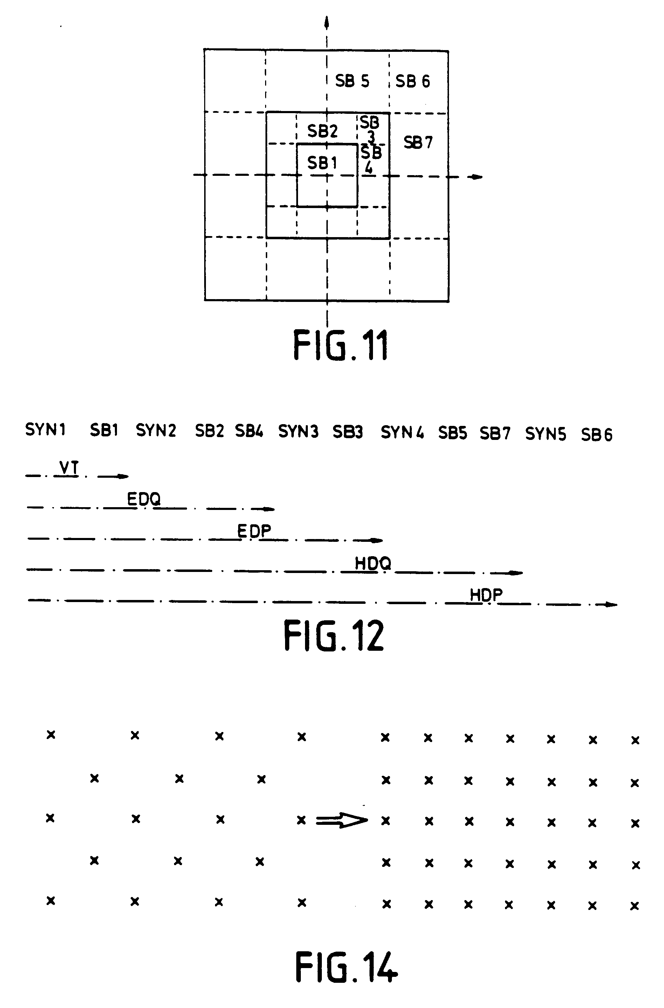

Une première variante de réalisation de l'invention est décrite ci-après à l'aide des figures 11 à 15. Cette variante de réalisation n'utilise que des filtres orthogonaux séparables (c'est-à-dire des filtres composés de filtres verticaux et de filtres horizontaux). Selon cette variante, la décomposition du signal HDP a lieu de la façon représentée aux figures 11 et 12 selon plusieurs sous-bandes obtenues par des filtres orthogonaux. Le signal HDP est d'abord décomposé en un signal EDP et en sous-bande SB5, SB6, SB7, correspondants respectivement à des hautes fréquences spatiales verticales/basses fréquences horizontales, hautes fréquences verticales/hautes fréquences horizontales, basses fréquences verticales/hautes fréquences horizontales .

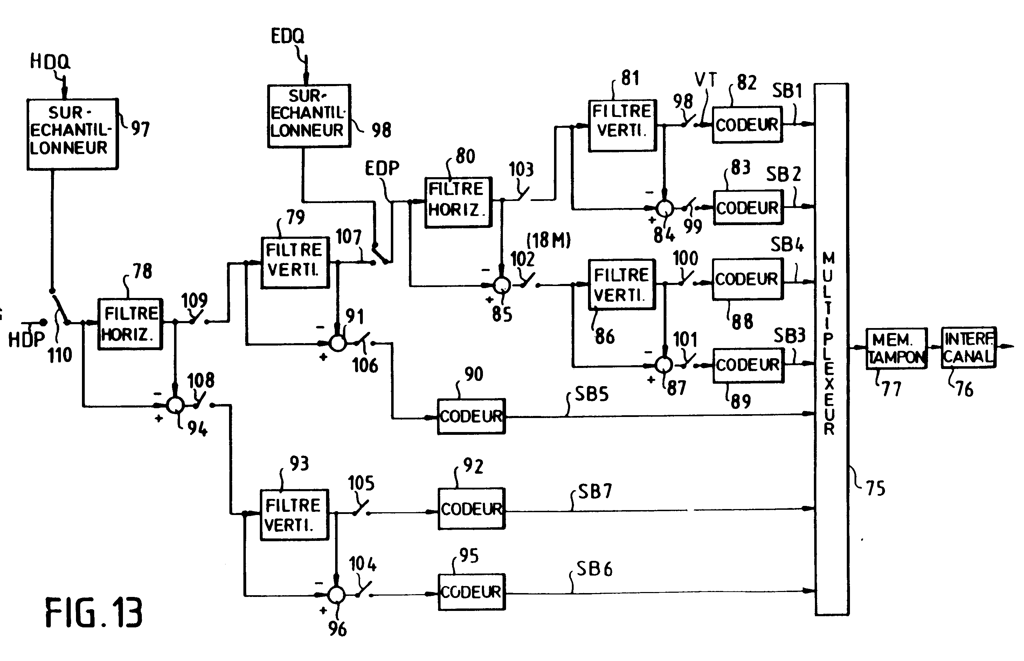

Selon ce principe, la bande EDP est divisée en une sous-bande SB1 (signal VT), et des sous-bande SB2, SB3 et SB4. La réalisation d'un codeur selon ce procédé, est représenté à la figure 13.

Ce codeur est organisé autour d'un multiplexeur 75 qui transmet à un circuit d'interface-canal 76, par l'intermédiaire de registre tampon 77, les signaux codés relatifs aux sous-bandes décrites précédemment.

Le signal VT est obtenu par filtrages successifs du signal HDP au travers de filtres horizontaux et verticaux 78 à 81, respectivement alternés et placés dans cet ordre en série. La sortie du filtre vertical 81 est reliée à l'entrée d'un codeur 82 qui fournit le signal VT dans la sous-bande SB1. Le signal dans la sous-bande SB2 est fourni par un codeur 83. Ce codeur a son entrée reliée à la sortie d'un circuit soustracteur 84 dont les deux entrées d'opérandes sont respectivement reliées à l'entrée et à la sortie du filtre vertical 81. Le circuit sous-tracteur 84 fournit ainsi à l'entrée du codeur 83, les composantes verticales du spectre du signal qui est appliqué à l'entrée du filtre vertical 81 et qui définissent la sous-bande SB2. De même, les composantes spatiales verticales du spectre du signal EDP appliqué à l'entrée du filtre horizontal 80, sont obtenues à la sortie d'un circuit soustracteur 85, couplé par ses deux entrées d'opérandes respectivement à l'entrée et à la sortie du filtre horizontal 80. Le résultat de la soustraction effectuée par le circuit soustracteur 85 est appliqué, d'une part, à l'entrée d'un filtre vertical 86 et, d'autre part, sur une première entrée d'opérande d'un circuit soustracteur 87 dont la deuxième entrée d'opérande est reliée à la sortie du filtre vertical 86. Le filtre vertical 86 fournit les composantes verticales filtrées du signal obtenu à la sortie du circuit soustracteur 85, à l'entrée d'un codeur 88. Le signal codé à la sortie du codeur 88 est codé dans la sous-bande SB4. Le signal obtenu à la sortie du circuit soustracteur 87 est appliqué à l'entrée d'un codeur 89 et le résultat du codage est transmis dans la sous-bande SB3. Les signaux émis par les codeurs 88 et 89 forment, avec les signaux fournis par les codeurs 82 et 83, un signal EDP.

Le signal codé dans la sous-bande SB5 est codé par le codeur 90 qui code les signaux fournis par un circuit soustracteur 91 dont les deux entrées d'opérandes sont reliées respectivement à l'entrée et à la sortie du filtre vertical 79.

Le signal codé dans la sous-bande SB7 est obtenu à la sortie d'un codeur 92 dont l'entrée est reliée à la sortie d'un filtre vertical 93. Ce filtre vertical 93 a son entrée reliée à la sortie d'un circuit soustracteur 94 dont les deux entrées d'opérandes sont reliées respectivement à l'entrée et à la sortie d'un filtre horizontal 78. Les signaux codés dans la bande SB6 sont fournis par un codeur 95 dont l'entrée est reliée à la sortie d'un circuit soustracteur 96. Le circuit soustracteur 96 a ses deux entrées d'opérandes reliées respectivement à l'entrée et à la sortie du filtre vertical 93.

La juxtaposition des sous-bandes SB5 et SB7, au signal EDP transmis dans les sous-bandes SB1 à SB4 permet d'obtenir le signal HDQ précité. De manière similaire, la juxtaposition du signal émis dans la sous-bande SB6 au signal HDQ émis dans la juxtaposition des sous-bandes SB1 à SB7 permet de reconstituer le signal HDP, de la façon représentée à la figure 12.

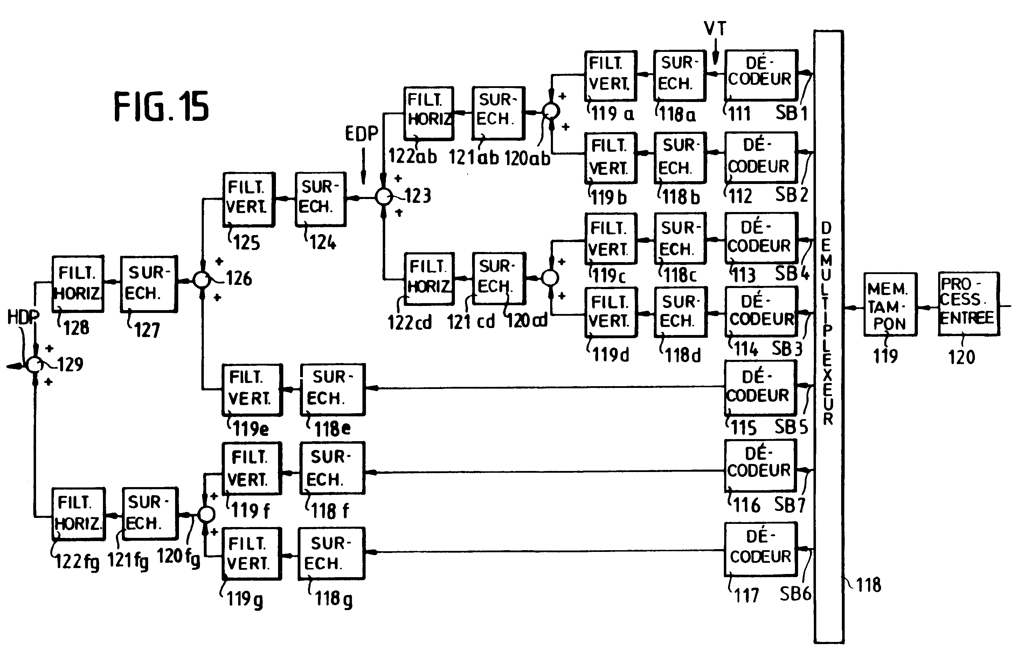

Cependant cette variante de réalisation de l'invention ne permet pas de faire apparaître naturellement les standards quinconce HDQ et EDQ, par le fait même qu'aucun filtre diagonal, ni grille de passage d'échantillonnage orthogonal/quinconce ne sont mis en oeuvre. De ce fait, elle ne répond pas parfaitement à la compatibilité recherchée entre signaux échantillonnés orthogonaux du type HDP, EDP, VT, et signaux échantillonnés selon une structure quinconce du type HDQ ou EDQ. Cette difficulté peut toutefois être surmontée en sur-échantillonnant aux moyens de circuits sur-échantillonneurs 97, 98, les signaux se présentant sous forme une quinconce, avant de les appliquer à l'entrée du codeur de la figure 13 selon une grille orthogonale du type de celle représentée à la figure 14, de façon à convertir les signaux HDQ et EDQ respectivement dans les standards HDP et EDP. Des circuits de sous-échantillonnage référencés respectivement 98 à 110 sont placés à l'entrée des codeurs pour permettre la juxtaposition des sous-bandes SB1 à SB7.

Un décodeur correspondant à la première variante de réalisation de l'invention est représentée à la figure 15. Ce décodeur réalise les fonctions inverses du codeur de la figure 13. Il comprend un ensemble de blocs de décodage, référencés respectivement de 111 à 117, pour permettre le décodage des signaux transmis dans les sous-bandes SB1 à SB7. Ces signaux sont transmis à l'entrée des décodeurs 111-117 de manière similaire au dispositif de décodage de la figure 10, c'est-à-dire au travers d'un circuit de multiplexage 118, une mémoire tampon 119 et un processeur d'entrée 120. Ces signaux fournis par chacun des décodeurs sont d'abord sur-échantillonnés par des dispositifs de sur-échantillonnage notés respectivement 118a à 118g, pour être ensuite filtrés verticalement par des filtres verticaux notés respectivement de 119a à 119g. Des circuits additionneurs 120ab, 120cd et 120fg, effectuent respectivement l'addition des signaux fournis par les filtres verticaux 119a, 119b, 119c, 119d, 119f, 119g. Les signaux fournis par ces circuits additionneurs sont à leur tour sur-échantillonnés par des dispositifs de sur-échantillonnage notés respectivement 121ab, 121cd et 121fg, puis filtré horizontalement par des filtres horizontaux notés respectivement 122ab, 122cd et 122fg. Les signaux fournis par les filtres horizontaux 122ab et 122cd sont alors additionnés dans un circuit additionneur 123 qui fournit à sa sortie le signal EDP. Ce signal EDP est à son tour sur-échantillonné par un circuit de sur-échantillonnage 124, puis filtré verticalement par un filtre vertical 125 afin d'être additionné par un circuit additionneur 126 au résultat du filtrage effectué par le filtre vertical 119e. Le résultat de l'addition effectué par le circuit additionneur 126 est sur-échantillonné par un circuit de sur-échantillonnage 127, puis filtré horizontalement par un filtre horizontal 128. Le résultat du filtrage effectué par le filtre horizontal 128 est ajouté au résultat du filtrage fourni par le filtre horizontal 122fg dans un circuit additionneur 129 pour fournir le signal HDP.

Dans le mode de réalisation de la figure 15, le décodage compatible des signaux VT ou EDP n'impose pas d'utiliser la totalité du moteur de décodage du signal HDP. Le signal HDQ peut être obtenu à partir du signal HDP toutefois la sous-bande SB6 qui représente des fréquences absentes du spectre HDQ n'a pas besoin d'être décodée. De même le signal EDQ peut être obtenu à partir du signal EDP, le signal issu de la sous-bande SB3 ne nécessitant pas d'être décodé. Ceci conduit, dans le cas d'un décodeur HDQ respectivement EDQ, à un décodeur qui est du type HDP respectivement EDP, mais allégé du décodage relatif de la sous-bande SB6 respectivement SB3.

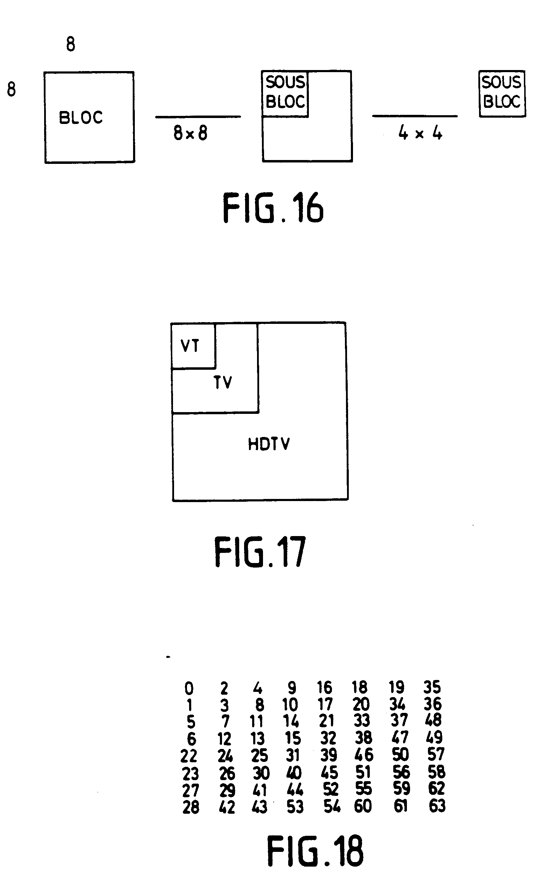

Naturellement les modes de réalisation de l'invention qui viennent d'être décrits ne sont pas uniques. Une seconde variante de réalisation de l'invention, peut encore consister à utiliser une méthode différente pour obtenir le découpage du signal haute définition en sous-bandes de résolutions différentes, le multiplexage décrit précédemment pour la génération des trains binaires étant conservé. Comme décrit dans l'article de J.M. ADANT et al. "Block operations in digital signal processing with application to TV coding" - Signal Processing - pages 385-397 de 1987, il est toujours possible de considérer qu'un filtrage demi-bande et une décimation d'un rapport 2 bidimensionnel suffisent pour passer du format HDP au format EDP et peuvent être obtenu de la façon représentée à la figure 16. Dans le cas des systèmes de compression d'images exploitant la transformée cosinus, cette propriété permet d'obtenir facilement une compatibilité descendante. En effet, pour disposer de plusieurs niveaux de compatibilité, il suffit de définir des sous-blocs imbriqués de la manière représentée à la figure 17.

La compatibilité entre les systèmes est alors obtenue en modifiant légèrement le balayage habituel des blocs de coefficients des transformées cosinus pour extraire le sous-bloc de plus petite dimension d'abord 4x4 (8x8) par exemple, et ensuite les autres blocs. Un exemple de balayage modifié est représenté à la figure 17.

L'information séquentielle qui est obtenue après balayage, peut alors être intégrée dans la structure de multiplexage précédemment décrite dans la mesure où on se restreint aux formats orthogonaux VT, EDP, HDP. Les sous-bandes SB1 à SB6 sont alors définies par le balayage des coefficients de la transformée cosinus de la manière suivante :
- SB1: : coef. 1 .....coef. 4
- SB2+SB4+SB3: : coef. 5 .....coef. 16
- SB5+SB7+SB6: : coef. 17 .... coef. 64

## Revendications

1. Procédé de compression de l'information destiné au décodage compatible d'une famille de signaux de télévision de résolutions croissantes, ces signaux étant transmis entre au moins un codeur d'émission et un décodeur de réception consistant, au niveau du codeur, à découper la bande de fréquence spatiale du signal à transmettre de résolution la plus grande en sous-bandes adjacentes, caractérisé en ce qu'il réalise au niveau du codeur une transformation bidimensionnelle de type cosinus du signal à transmettre et qu'il découpe la bande par un balayage successif des sous-blocs imbriqués résultants de la transformation et correspondants à des groupes de sous-bandes de résolutions différentes et, au niveau du décodeur, à décoder les signaux reçus relatifs aux groupes de sous-bandes en ne considérant que ceux qui sont nécessaires à la reconstitution d'au moins 1 membre de la famille de résolution correspondant à la résolution du récepteur.

2. Procédé selon la revendication 1, caractérisé en ce que les familles de résolution comprennent :
- une première famille (HDP) de résolution définie par 1920 points par ligne et 1152 lignes,
- une deuxième famille (EDP) de résolution définie par 960 points par ligne et 576 lignes,
- une troisième famille (VT) de résolution définie par 480 points par ligne et 288 lignes.

3. Procédé selon la revendication 1, caractérisé en ce que le signal de télévision de résolution la plus grande est un signal haute définition (HDP) possédant 1920 points par ligne et 1152 lignes.

4. Procédé selon les revendications 1 ou 2, caractérisé en ce qu'il consiste, pour permettre la réalisation de fonctions d'avance rapide et de retour rapide de magnétoscope, à enregistrer directement sur la bande magnétique du magnétoscope les signaux codés reçus du codeur d'émission et à décoder simultanément suivant leur résolution la plus faible (VT) les signaux reçus avant de les enregistrer en parallèle sur la bande magnétique avec les signaux codés provenant du codeur d'émission.

## Claims

1. Process for compressing data intended for the compatible decoding of a group of television signals with increasing resolutions, these signals being transmitted between at least one transmitting coder and one receiving decoder consisting, at the coder, in chopping the spatial frequency band of the signal to be transmitted of highest resolution into adjacent sub-bands, characterized in that it carries out, at the coder, a cosine type two-dimensional transformation of the signal to be transmitted and that it chops the band through successive scanning of the nested sub-blocks resulting from the transformation and corresponding to families of sub-bands with different resolutions and, at the decoder, in decoding the signals received relating to the families of sub-bands, considering only those which are required to reconstitute at least 1 member of the resolution group corresponding to the resolution of the receiver.

2. Process according to Claim 1, characterized in that the resolution groups comprise:
- a first resolution group (HDP) defined by 1920 points per line and 1152 lines,
- a second resolution group (EDP) defined by 960 points per line and 576 lines,
- a third resolution group (VT) defined by 480 points per line and 288 lines.

3. Process according to Claim 1, characterized in that the television signal of highest resolution is a high definition signal (HDP) possessing 1920 points per line and 1152 lines.

4. Process according to Claims 1 or 2, characterized in that it consists, in order to allow the effecting of fast forward and fast rewind functions of a video recorder, in recording directly on the magnetic tape of the video recorder the coded signals received from the transmitting coder and in decoding simultaneously in accordance with their lowest resolution (VT) the signals received before recording them in parallel on the magnetic tape together with the coded signals originating from the transmitting coder.

## Patentansprüche

1. Informationskomprimierungsverfahren zum kompatiblen Decodieren einer Gruppe von Fernsehsignalen mit steigender Auflösung, wobei diese Signale zwischen wenigstens einem Sendecodierer und einem Empfangscodierer übertragen werden, das darin besteht, daß beim Codierer das räumliche Frequenzband des zu übertragenden Signals mit der größten Auflösung in benachbarte Teilbänder unterteilt wird, dadurch gekennzeichnet, daß beim Codierer eine zweidimensionale Transformation vom Cosinus-Typ des zu übertragenden Signals durchgeführt wird und daß das Band durch aufeinanderfolgendes Abtasten in ineinander verschachtelte Teilblöcke unterteilt wird, die sich aus der Transformation ergeben und Gruppen von Teilbändern mit unterschiedlichen Auflösungen entsprechen, und beim Decodierer die empfangenen Signale bezüglich der Gruppen von Teilbändern decodiert werden, indem nur diejenigen betrachtet werden, die für die Wiederherstellung wenigstens eines Mitglieds der Auflösungsgruppe entsprechend der Auflösung des Empfängers notwendig sind.

2. Verfahren nach Anspruch 1, dadurch gekennzeichnet, daß die Auflösungsgruppen enthalten:
- eine erste Auflösungsgruppe (HDP), die durch 1.920 Punkte pro Zeile und 1.152 Zeilen definiert ist;
- eine zweite Auflösungsgruppe (EDP), die durch 960 Punkte pro Zeile und 576 Zeilen definiert ist;
- eine dritte Auflösungsgruppe (VT), die durch 480 Punkte pro Zeile und 288 Zeilen definiert ist.

3. Verfahren nach Anspruch 1, dadurch gekennzeichnet, daß das Fernsehsignal mit der größten Auflösung ein hochauflösendes Signal (HDP) mit 1.920 Punkten pro Zeile und 1.152 Zeilen ist.

4. Verfahren nach Anspruch 1 oder 2, dadurch gekennzeichnet, daß es darin besteht, daß für die Realisierung der schnellen Vorlauf- und Rücklauffunktionen eines Video-Rekorders auf dem Magnetband des Rekorders die vom Sendecodierer empfangenen codierten Signale direkt aufgezeichnet werden und die empfangenen Signale simultan entsprechend ihrer geringsten Auflösung (VT) decodiert werden, bevor sie auf dem Magnetband parallel mit den vom Sendecodierer kommenden Signalen aufgezeichnet werden.
